# EUROPEAN PATENT APPLICATION

(11) **EP 4 597 217 A1**
(43) Date of publication of application: **06.08.2025**
(21) Application number: 23872820.8
(22) Date of filing: 29.08.2023
(51) Int. Cl.: G03B 5/04, G03B 13/36, G03B 3/10, G03B 17/12, G02B 7/02, G02B 7/10

(54) **ACTUATOR AND CAMERA DEVICE COMPRISING SAME**

(30) Priority: 27.09.2022 KR 20220122448
(71) Applicant: LG INNOTEK CO. LTD, Gangseo-gu Seoul 07796 (KR)
(72) Inventor: LEE, Hyun Joong, Seoul 07796 (KR)
(74) Representative: M. Zardi & Co S.A.
(86) International application number: PCT/KR2023/012743
(87) International publication number: WO 2024/071698

(57) **Abstract**

An Embodiment includes a lens barrel, a magnet disposed on the lens barrel, and a coil configured to move the lens barrel in a first direction through interaction with the magnet. The coil includes a first coil unit, a second coil unit, and a third coil unit disposed in the first direction. The magnet overlaps the first to third coil units in a second direction perpendicular to the first direction, and a length of the magnet in the first direction is less than a sum of the lengths of the first to third coil units in the first direction.

## Description

### [Technical Field]

Embodiments relate to an actuator and a camera device including the same.

### [Background Art]

Camera devices are devices that take pictures or videos of subjects, and are mounted in portable devices, drones, vehicles, and the like. In order to improve the quality of an image, a camera device may have an image stabilization (IS) function of correcting or preventing shaking of an image caused by movement of a user, e.g. an optical image stabilization (OIS) function, an autofocus (AF) function, and/or a zoom function.

### [Disclosure]

### [Technical Problem]

Embodiments provide an actuator capable of securing uniform and stable driving force for movement of a moving unit in an optical-axis direction and increasing the stroke range of the moving unit and a camera device including the same.

### [Technical Solution]

An actuator according to an embodiment includes a lens barrel, a magnet disposed on the lens barrel, and a coil configured to move the lens barrel in a first direction through interaction with the magnet. The coil includes a first coil unit, a second coil unit, and a third coil unit disposed in the first direction. The magnet overlaps the first to third coil units in a second direction perpendicular to the first direction, and a length of the magnet in the first direction is less than a sum of the lengths of the first to third coil units in the first direction.

The length of the magnet in the first direction may be greater than a sum of the lengths of two coil units in the first direction among the first to third coil units.

Signals having different phases may be respectively supplied to the first to third coil units. Alternating-current signals having different phases may be respectively supplied to the first to third coil units. Signals having a phase difference of 120 degrees from each other may be respectively supplied to the first to third coil units. Alternating currents having a phase difference of 120 degrees from each other may be respectively supplied to the first to third coil units.

The magnet may include a first magnet part including an N pole and an S pole facing each other in the second direction, a second magnet part including an S pole and an N pole facing each other in the second direction, and a partition wall disposed between the first magnet part and the second magnet part. The first magnet part and the second magnet part may be disposed in the first direction, with the partition wall interposed therebetween.

A length of the first magnet part in the first direction may be greater than the length of each of the first to third coil units in the first direction, and a length of the second magnet part in the first direction is greater than the length of each of the first to third coil units in the first direction.

A length of the first magnet part in the first direction may be greater than the length of the first coil unit in the first direction. A length of the second magnet part in the first direction may be greater than the length of the first coil unit in the first direction.

Each of the first to third coil units may have a ring shape including a cavity formed therein, and a length of the partition wall in the first direction may be greater than the length of the cavity in the first direction.

The first coil unit may have a ring shape including a cavity formed therein, and a length of the partition in the first direction may be greater than the length of the cavity in the first coil unit in the first direction.

The first magnet part and the second magnet part may have a first pitch therebetween that is greater than a second pitch between two adjacent coil units among the first to third coil units. The first pitch may be a distance between the center of the first magnet part and the center of the second magnet part, and the second pitch may be a distance between the center of the cavity in one of the two adjacent coil units and the center of the cavity in the remaining one of the two adjacent coil units.

A length of the magnet in a third direction may be less than the length of the magnet in the first direction, and the third direction may be perpendicular to each of the first direction and the second direction. The length of the magnet in the third direction may be less than the length of each of the first to third coil units in the third direction.

The actuator may include a first sensor disposed in the cavity in the first coil unit and a second sensor disposed in the cavity in the third coil unit.

An actuator according to another embodiment includes a first lens barrel, a first magnet disposed on the first lens barrel, and a first coil configured to move the first lens barrel in a first direction through interaction with the first magnet. The first coil includes six coil units disposed in the first direction. The first magnet includes a first magnet part including an N pole and an S pole, a second magnet part including an S pole and an N pole, and a partition wall disposed between the first magnet part and the second magnet part. A length of the first magnet part in the first direction may be greater than the length of each of the six coil units of the first coil in the first direction.

A length of the second magnet part in the first direction may be greater than the length of each of the six coil units of the first coil in the first direction. The first magnet may overlap three adjacent coil units among the six coil units of the first coil in a second direction perpendicular to the first direction. The first magnet may have a length in the first direction that is greater than a sum of the lengths of two adjacent coil units among the six coil units. A length of the first magnet in the first direction may be less than a sum of the lengths of three adjacent coil units among the six coil units. Signals having a phase difference of 120 degrees from each other may be respectively supplied to the three adjacent coil units among the six coil units of the first coil.

Alternating currents having a phase difference of 120 degrees from each other may be respectively supplied to the three adjacent coil units among the six coil units of the first coil.

The actuator according to the other embodiment may include a second lens barrel, a second magnet disposed on the second lens barrel, and a second coil configured to move the second lens barrel in the first direction through interaction with the second magnet. The second coil may include six coil units disposed in the first direction. The second magnet may include a third magnet part including an N pole and an S pole, a fourth magnet part including an S pole and an N pole, and a partition wall disposed between the third magnet part and the fourth magnet part. A length of the third magnet part in the first direction may be greater than the length of each of the six coil units of the second coil in the first direction.

### [Advantageous Effects]

As is apparent from the above description, according to the embodiment, a magnet and three coil units, to which three-phase driving currents are supplied, have proper sizes and disposition relationship therebetween so that variation in driving force in an optical-axis direction is not large. Accordingly, uniform driving force in the optical-axis direction may be obtained, and as a result, accuracy of zoom operation and autofocus operation of a lens assembly may be improved.

In addition, in the embodiment, since six coil units are sequentially disposed in the optical-axis direction, the movable distance of the magnet may be increased, and accordingly, the stroke range of the lens assembly may be increased.

### [Description of Drawings]

FIG. 1 is a perspective view of an actuator according to an embodiment;
FIG. 2 is an exploded perspective view of the actuator shown in FIG. 1;
FIG. 3A is a cross-sectional view taken along line AB in the actuator shown in FIG. 1;
FIG. 3B is a cross-sectional view taken along line CD in the actuator shown in FIG. 1;
FIG. 4A is a first perspective view of a housing;
FIG. 4B is a second perspective view of the housing;
FIG. 5A is a first exploded perspective view of a lens unit and a driver;
FIG. 5B is a second exploded perspective view of the lens unit and the driver;
FIG. 6A is a plan view of a first magnet, coil units of a first coil, and a position sensor;
FIG. 6B is a schematic cross-sectional view of the first magnet and the coil units of the first coil;
FIG. 7 illustrates driving signals supplied to the coil units of the first coil;
FIG. 8 illustrates first to third driving signals supplied to first to third coil units;
FIG. 9 illustrates electromagnetic force between the first to third coil units, to which the first to third driving signals are supplied, and the first magnet;
FIG. 10 illustrates magnetic force generated from first to sixth coil units, to which the first to third driving signals are supplied, and magnetic force generated from the first magnet;
FIG. 11 illustrates disposition of two coil units and a magnet according to a comparative example;
FIG. 12 illustrates the Lorentz force generated by interaction between the coil units and the magnet shown in FIG. 11;
FIG. 13 is a schematic diagram of a camera device according to an embodiment;
FIG. 14 is a perspective view of an optical instrument according to an embodiment; and
FIG. 15 is a configuration diagram of the optical instrument shown in FIG. 14.

### [Best Mode]

Hereinafter, embodiments of the present disclosure, which may concretely realize the objects described above, will be described with reference to the accompanying drawings.

In the following description of the embodiments, it will be understood that, when each element is referred to as being "on" or "under" another element, it can be directly on or under the other element, or can be indirectly formed such that one or more intervening elements are also present. In addition, when an element is referred to as being "on or under," "under the element" as well as "on the element" may be included based on the element.

In addition, the relational terms "first," "second," "on/upper part/above," and "under/lower part/below" are used herein only to distinguish between one subject or element and another subject or element without necessarily requiring or involving any physical or logical relationship or sequence between such subjects or elements. Wherever possible, the same reference numerals will be used throughout the drawings to refer to the same parts.

Additionally, the terms "comprises," "includes," and "has" described herein should be interpreted not to exclude other elements but to further include such other elements, since the corresponding elements may be inherent unless mentioned otherwise. In addition, the term "corresponding to" described herein may encompass at least one of the meanings of "facing" and "overlapping."

Hereinafter, a camera device and an optical instrument including the same according to embodiments will be described with reference to the accompanying drawings. For convenience of description, a camera device according to an embodiment will be described using the Cartesian coordinate system (x,y,z), but the embodiments are not limited thereto, and may be described using other coordinate systems. In the respective drawings, the X-axis and the Y-axis may be directions perpendicular to the Z-axis, which is an optical-axis (OA) direction.

In addition, the Z-axis direction, which is the optical-axis (OA) direction, may be referred to as "any one of the first direction, the second direction, and the third direction", the X-axis direction may be referred to as "another one of the first direction, the second direction, and the third direction", and the Y-axis direction may be referred to as "the remaining one of the first direction, the second direction, and the third direction". In addition, the Y-axis may be referred to as a "first axis", and the Y-axis direction may be referred to as a "first-axis direction". The X-axis may be referred to as a "second axis", and the X-axis direction may be referred to as a "second-axis direction". For example, the optical-axis direction may be a direction of the optical axis (OA) of a lens unit 620 or a direction parallel to the optical axis.

An actuator according to an embodiment may perform an autofocus function and a zoom function. The autofocus function may be a function of automatically focusing on a subject by moving a lens in the optical-axis direction according to the distance to the subject so that an image sensor obtains a clear image of the subject. The zoom function may be a function of photographing a subject by increasing or decreasing the magnification of a distant subject through a zoom lens.

A camera device according to an embodiment may perform a hand-tremor compensation function. The hand-tremor compensation function may be a function of moving a lens in a direction perpendicular to the optical-axial direction or tilting the lens with respect to the optical axis so as to cancel vibration (or motion) caused by shaking of the user's hand.

Hereinafter, the "actuator" may alternatively be referred to as a "lensmoving device", a "lens-driving device", or a "motor". In addition, the "camera device" may alternatively be referred to as a "camera", a "camera module", an "image-capturing device", or a "photographing device".

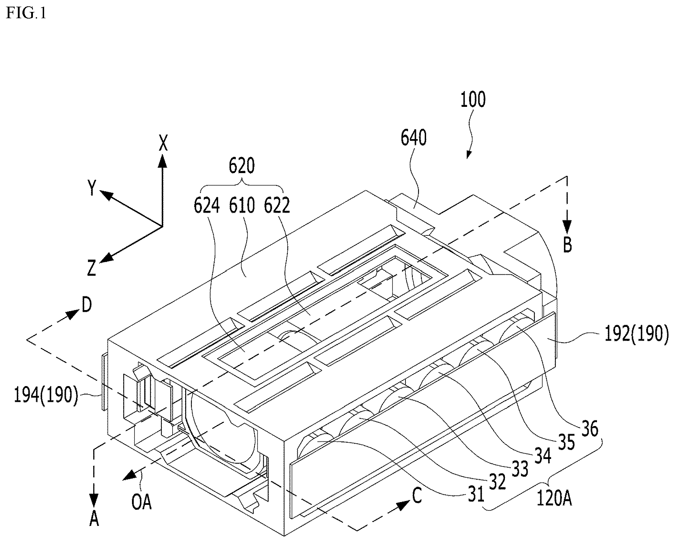

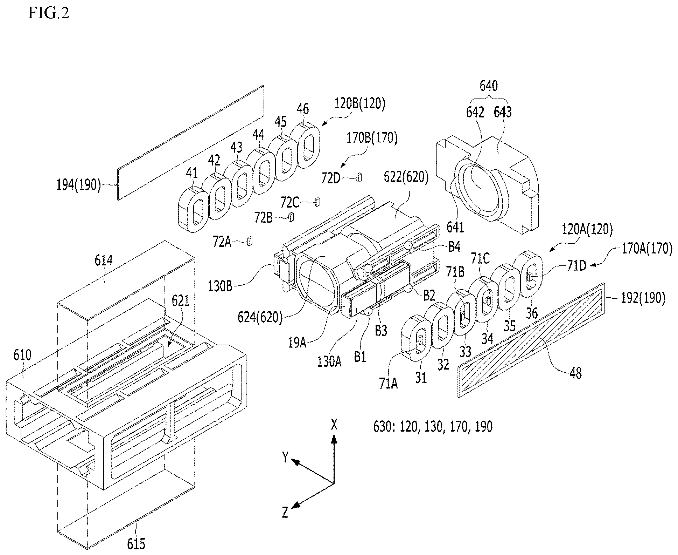

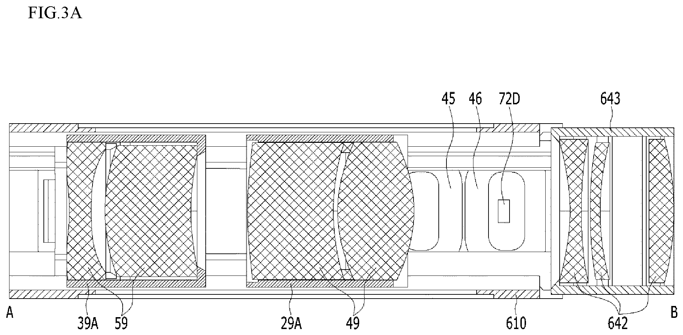

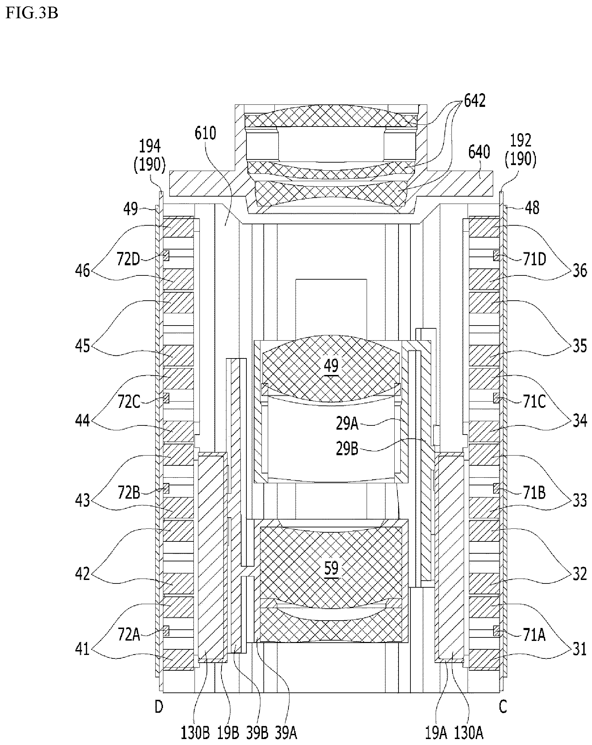

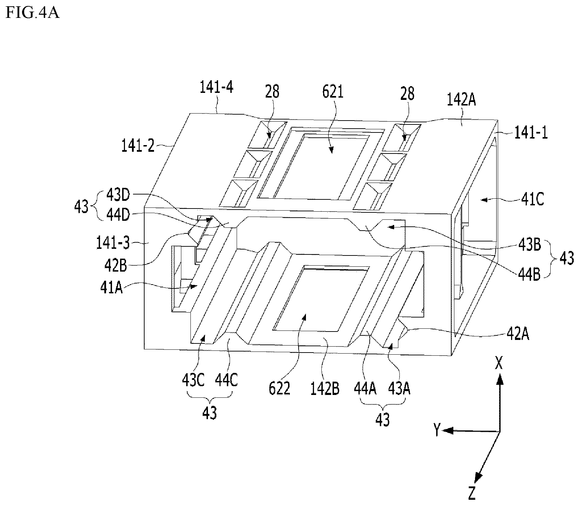

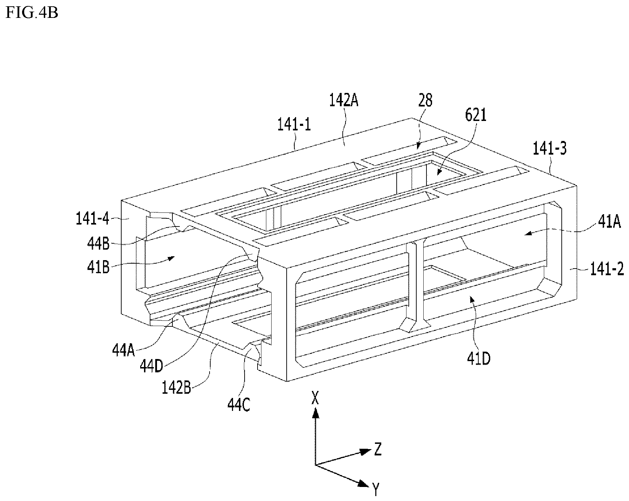

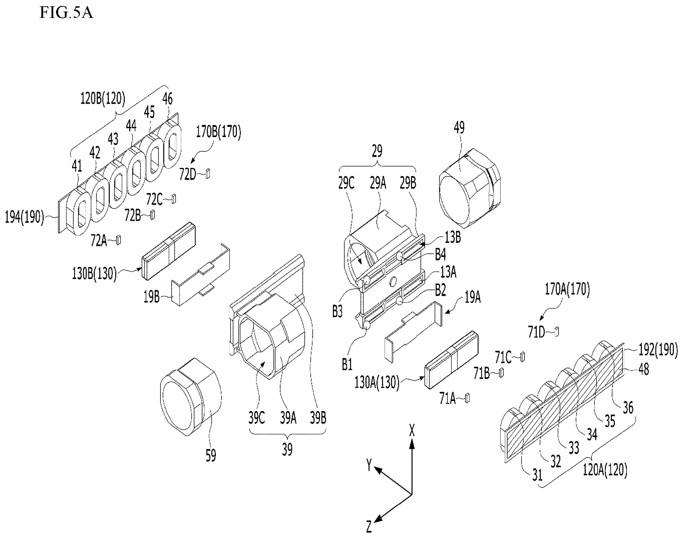

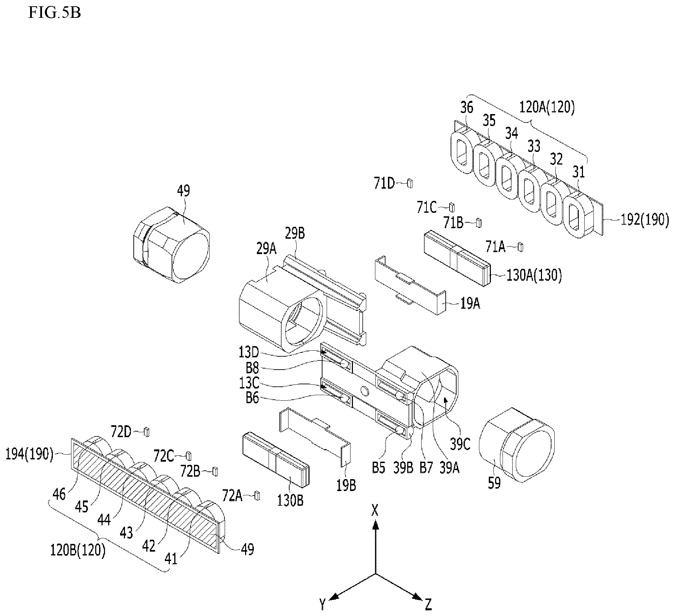

FIG. 1 is a perspective view of an actuator 100 according to an embodiment, FIG. 2 is an exploded perspective view of the actuator 100 shown in FIG. 1, FIG. 3A is a cross-sectional view taken along line AB in the actuator 100 shown in FIG. 1, FIG. 3B is a cross-sectional view taken along line CD in the actuator 100 shown in FIG. 1, FIG. 4A is a first perspective view of a housing 610, FIG. 4B is a second perspective view of the housing 610, FIG. 5A is a first exploded perspective view of a lens unit 620 and a driver 630, and FIG. 5B is a second exploded perspective view of the lens unit 620 and the driver 630. Illustration of the covers 614 and 615 and the yokes 48 and 49 shown in FIGs. 2 and 5B is omitted in FIG. 1.

The actuator 100 may move lens assemblies 622 and 624 in the optical-axis direction, thereby performing an autofocus function and/or a zoom function, and may alternatively be referred to as a "first driver" or an "AF/zoom driver".

Referring to FIGs. 1 to 5B, the actuator 100 may include a lens unit 620 and a driver 630 configured to move the lens unit 620 in the first direction (e.g. the optical-axis direction or the Z-axis direction).

The actuator 100 may include a housing 610 accommodating or supporting the lens unit 620 and the driver 630. For example, the lens unit 620 may be disposed in the housing 610. The lens unit 620 may be a "moving unit" configured to be movable in the first direction with respect to a fixed unit. For example, the fixed unit may include the housing 610 and at least one of components coupled to the housing 610, for example, a coil 120, a position sensor 170, a circuit board 190, yokes 48 and 49, and covers 614 and 615.

The lens unit 620 may alternatively be referred to as a "lens assembly". For example, the lens unit 620 may include a plurality of lens assemblies.

As shown in FIG. 2, the lens unit 620 may include two lens assemblies 622 and 624. In another embodiment, the lens unit 630 may include three or more lens assemblies. For example, the lens assembly 622 and the lens assembly 624 may be arranged so as to correspond to, face, or overlap each other in the first direction.

The actuator 100 may further include a lens assembly 640 disposed in front of the lens unit 620. For example, the lens assembly 640 may be disposed opposite the lens assembly 624 with respect to the lens assembly 622. For example, the lens assembly 640 may be a fixed lens assembly, which is fixed in position rather than being movable in the optical-axis direction.

The lens assembly 640 may include a first lens array 642 (or a first lens group). For example, the lens assembly 640 may further include a lens barrel 641 coupled to the first lens array 642. In addition, the lens assembly 640 may further include a housing 643 coupled to the lens barrel 641. The housing 643 may be disposed in front of the housing 610. The housing 643 may be coupled to the housing 610.

Although the lens assembly 640 is described as being included in the actuator 100, the disclosure is not limited thereto. In another embodiment, the lens assembly 640 may be implemented as a separate component, rather than being included in the actuator 100. In still another embodiment, the lens assembly 640 may be omitted.

In the embodiment, any one of the lens assemblies 640, 622, and 624 may be referred to as a "first lens assembly", another one of the lens assemblies 640, 622, and 624 may be referred to as a "second lens assembly", and the remaining one of the lens assemblies 640, 622, and 624 may be referred to as a "third lens assembly". For example, in the embodiment, the first lens assembly 640 may be a fixed lens group, and each of the second lens assembly 622 and the third lens assembly 624 may include a moving lens group or a lens group.

For example, the first lens assembly 640 may function as a focator for imaging parallel light at a specific position. In addition, the second lens assembly 622 may function as a variator for re-imaging the image formed by the first lens assembly 640 as the focator at another position.

Meanwhile, since a distance to a subject or an image distance varies significantly, the magnification may be significantly changed in the second lens assembly 622, and the second lens assembly 622 as the variator may play an important role in change in the focal length or magnification of the optical system. Meanwhile, an image point formed by the second lens assembly 622 as the variator may slightly differ according to the position.

In addition, the third lens assembly 624 may perform a position compensation function for the image formed by the variator. For example, the third lens assembly 624 may function as a compensator that performs a role of accurately forming the image point, which is formed by the second lens assembly 622 as the variator, on a pixel of the image sensor 540.

For example, the second lens assembly 622 may be a zoom lens assembly that performs a zoom function, and the third lens assembly 624 may be a focus lens assembly that performs a focus function.

The housing 610 may alternatively be referred to as a "base", a "holder", or a "case".

The housing 610 may have a polyhedral (e.g. rectangular parallelepiped) shape having a space defined therein to accommodate or support the lens unit 620 and the driver 630.

For example, the housing 610 may include a body 612, which includes an upper portion (or an upper plate) 142A, a lower portion (or a lower plate) 142B, and a plurality of side portions 141-1 to 141-4 disposed between the upper portion 142A and the lower portion 142B.

The side portions 141-1 to 141-4 may alternatively be referred to as "side plates" or "side walls". For example, the first side portion 141-1 and the second side portion 141-2 may face each other or may be located opposite each other in the second direction (e.g. the Y-axis direction), and the third side portion 141-3 and the fourth side portion 141-4 may face each other or may be located opposite each other in the first direction.

A first opening (or a first hole) 41A may be formed in the side portion 141-3 of the housing 610 in order to expose one end of the lens unit 620, and a second opening (or a second hole) 41B may be formed in the side portion 141-4 of the housing 610 in order to expose the other end of the lens unit 620.

In addition, an opening (or a third hole) 41C may be formed in the side portion 141-1 of the housing 610 in order to allow a first coil 120A to be disposed or seated therein, and an opening (or a fourth hole) 41D may be formed in the side portion 141-4 of the housing 610 in order to allow a second coil 120B to be disposed or seated therein. Each of the openings 41C and 41D may be formed in a through-hole shape. In another embodiment, each of the openings 41C and 41D may be formed in a recess shape. In an example, each of the openings 41C and 41D may include two or more openings. In another embodiment, each of the openings 41C and 41D may be one in number.

In order to guide movement of the lens unit 620 in the optical-axis direction, the housing 610 may include at least one guide portion 43 formed on the inner surface thereof.

For example, the at least one guide portion 43 may include at least one protrusion 44A to 44D formed on at least one of the upper portion 142A or the lower portion 142B of the housing 610. In addition, the guide portion 43 may include at least one groove 43A to 43D formed between the at least one protrusion 44A to 44D and the side portion of the housing 610.

For example, the first protrusion 44A may be disposed on the inner surface of the lower portion 142B of the housing 610, and the second protrusion 44B may be formed on the inner surface of the upper portion 142A of the housing 610 so as to correspond to, face, or overlap the first protrusion 44A in the third direction (e.g. the X-axis direction). The first and second protrusions 44A and 44B may be disposed on the inner surface of the side portion 141-1 of the housing 610 so as to be spaced apart from each other at a predetermined interval.

For example, the first groove 43A may be formed in the inner surface of the lower portion 142B of the housing 610. The first groove 43A may be disposed adjacent to the lower portion of the inner surface of the side portion 141-1 of the housing 610. For example, the first groove 43A may be formed between the first protrusion 44A and the inner surface of the side portion 141-1 of the housing 610.

For example, the second groove 43B may be formed in the inner surface of the upper portion 142A of the housing 610. The second groove 43B may be disposed adjacent to the upper portion of the inner surface of the side portion 141-1 of the housing 610. For example, the second groove 43B may be formed between the second protrusion 44B and the inner surface of the side portion 141-1 of the housing 610.

For example, the third protrusion 44C may be disposed on the inner surface of the lower portion 142B of the housing 610, and the fourth protrusion 44D may be formed on the inner surface of the upper portion 142A of the housing 610 so as to correspond to, face, or overlap the third protrusion 44C in the third direction (e.g. the X-axis direction). The third and fourth protrusions 44C and 44D may be disposed on the inner surface of the side portion 141-2 of the housing 610 so as to be spaced apart from each other at a predetermined interval.

For example, the third groove 43C may be formed in the inner surface of the lower portion 142B of the housing 610. The third groove 43C may be disposed adjacent to the lower portion of the inner surface of the side portion 141-2 of the housing 610. For example, the third groove 43C may be formed between the third protrusion 44C and the inner surface of the side portion 141-2 of the housing 610.

For example, the fourth groove 43D may be formed in the inner surface of the upper portion 142A of the housing 610.

For example, the fourth groove 43D may be disposed adjacent to the upper portion of the inner surface of the side portion 141-2 of the housing 610. For example, the fourth groove 43D may be formed between the fourth protrusion 44D and the inner surface of the side portion 141-2 of the housing 610.

For example, grooves 42A and 42B may be formed in the inner surface of at least one of the side portions 141-1 and 141-2 of the housing 610 in order to allow rolling members B1 to B8 to be at least partially received or disposed therein. For example, grooves (e.g. 42A and 42B) may be formed in the inner surfaces of the side portions 141-1 and 141-2 of the housing 610 that are adjacent to at least one of the first to fourth grooves 43A to 43D. Two grooves (e.g. 42A and 42B) are formed in the configuration shown in FIG. 4A. However, in another embodiment, grooves may be formed so as to respectively correspond to the first to fourth grooves 43A to 43D.

A support portion 29B of the lens assembly 622 may be disposed in the first and second grooves 43A and 43B, and the first and second protrusions 44A and 44B may guide movement of the support portion 29B of the lens assembly 622.

In addition, a support portion 39B of the lens assembly 624 may be disposed in the third and fourth grooves 43C and 43D, and the third and fourth protrusions 44C and 44D may guide movement of the support portion 39B of the lens assembly 624.

The first to fourth protrusions 44A to 44D and the first to fourth grooves 43A to 43D may secure stable movement of the lens assemblies 622 and 624, and may prevent the support portions 29B and 39B from escaping from the grooves 43A to 43D or colliding with the lens unit 620 due to impact or the like.

The housing 610 may include an opening 621 formed in the upper portion 142A thereof to expose a part of the lens unit 620. In addition, the housing 610 may further include a cover 614 to cover the opening 621. For example, the housing 610 may include an opening 622 formed in the lower portion thereof to expose another part of the lens unit 620. In addition, the housing 610 may further include a cover 615 to cover the opening 622. In another embodiment, at least one of the openings 621 and 622 may not be formed, and the covers 614 and 615 may be omitted.

For example, the housing 610 may be formed through an injection-molding process. For example, at least one groove 28 may be formed in the outer surface of the upper portion 142A of the housing 610 so as to correspond to, face, or overlap the protrusions 44B and 44D. If the thickness of an injection-molded product is large, it is difficult to form a product having a desired shape through an injection-molding process. For this reason, a groove corresponding to the protrusion is formed. In addition, for example, at least one groove (not shown) may be formed in the outer surface of the lower portion 142B of the housing 610 so as to correspond to, face, or overlap the protrusions 44A and 44C.

The lens unit 620 may include a second lens assembly 622 and a third lens assembly 624, which are spaced apart from each other.

Referring to FIGs. 5A and 5B, the second lens assembly 622 may include a first lens holder 29. In addition, the second lens assembly 622 may include a second lens array (or a second lens group) 49, which is disposed on or coupled to the first lens holder 29. The lens holder may alternatively be referred to as a "bobbin". For example, the second lens array 49 may include a single lens or a plurality of lenses.

For example, the first lens holder 29 may include a first lens barrel 29A formed to allow the second lens array 49 to be disposed thereon or coupled thereto. For example, the first lens barrel 29A may be moved in the first direction by interaction between a first magnet 130A and a first coil 120A.

In addition, the first lens holder 29 may include a first support portion 29B, which is connected or coupled to the first lens barrel 29A. For example, the first lens barrel 29A may have a barrel shape, and may include an opening (or a hole) 29C through which the second lens array 49 is coupled thereto.

A first side surface (or a first surface) of the first support portion 29B may be connected or coupled to the first lens barrel 29A. The first support portion 29B may correspond to, face, or overlap the side portion 141-1 of the housing 610 in the second direction (e.g. the Y-axis direction). For example, the first support portion 29B may protrude from the front surface of the first lens barrel 29A in the first direction.

The first support portion 29B may include at least one first groove (or first guide groove) 13A and 13B to receive at least a portion of each of the rolling members B1 to B4. For example, the at least one first groove 13A and 13B may be formed in a second side surface (or a second surface) of the first support portion 29B. For example, the second side surface (or the second surface) of the first support portion 29B may be a surface opposite the first side surface (or the first surface) of the first support portion 29B.

For example, the at least one first groove 13A and 13B in the first support portion 29B may correspond to, face, or overlap the side portion 141-1 of the housing 610. For example, the at least one first groove 13A in the first support portion 29B may correspond to, face, or overlap the groove 42A formed in the side portion 141-1 of the housing 610.

For example, the at least one groove 13A may be formed in the lower side of the second side surface of the first support portion 29B, and the at least one groove 13B may be formed in the upper side of the second side surface of the first support portion 29B.

The third lens assembly 624 may include a second lens holder 39. In addition, the third lens assembly 624 may include a third lens array (or a third lens group) 59, which is disposed on or coupled to the second lens holder 39. For example, the third lens array 59 may include a single lens or a plurality of lenses.

For example, the second lens holder 39 may include a second lens barrel 39A formed to allow the third lens array 59 to be disposed thereon or coupled thereto. For example, the second lens barrel 39A may be moved in the first direction by interaction between a second magnet 130B and a second coil 120B.

In addition, the second lens holder 39 may include a second support portion 39B, which is connected or coupled to the second lens barrel 39A. For example, the second lens barrel 39A may have a barrel shape, and may include an opening (or a hole) 39C through which the third lens array 59 is coupled thereto.

A first side surface (or a first surface) of the second support portion 39B may be connected or coupled to the second lens barrel 39A. The second support portion 39B may correspond to, face, or overlap the side portion 141-2 of the housing 610 in the second direction (e.g. the Y-axis direction). For example, the second support portion 39B may protrude from the rear surface of the second lens barrel 39A in the first direction. For example, the second support portion 39B may protrude in a direction opposite the direction in which the first support portion 29B protrudes.

The second support portion 39B may include at least one second groove (or second guide groove) 13C and 13D to receive at least a portion of each of the rolling members B5 to B8. For example, the at least one second groove 13C and 13D may be formed in a second side surface (or a second surface) of the second support portion 39B. For example, the second side surface (or the second surface) of the second support portion 39B may be a surface opposite the first side surface (or the first surface) of the second support portion 39B.

For example, the at least one second groove 13C and 13D in the second support portion 39B may correspond to, face, or overlap the side portion 141-2 of the housing 610. For example, the at least one second groove 13D in the second support portion 39B may correspond to, face, or overlap the groove 42B formed in the side portion 141-2 of the housing 610.

For example, the at least one groove 13C may be formed in the lower side of the second side surface of the second support portion 39B, and the at least one groove 13D may be formed in the upper side of the second side surface of the second support portion 39B.

The plurality of lenses included in each of the second and third lens arrays 49 and 59 may be sequentially disposed or arranged in the first direction. For example, each of the second and third lens arrays 49 and 59 may include various types of optical lenses. For example, each of the second and third lens arrays 49 and 59 may include at least one of a front lens having positive power or a rear lens having negative power.

A distance between the second lens assembly 622 and the third lens assembly 624 in the optical-axis direction may be varied by the driver 630.

Each of the grooves 42A and 42B in the housing 610 and the grooves 13A to 13D in the first and second support portions may be formed so as to contact a corresponding one of the rolling members B1 to B8 at two or more points. For example, each of the grooves 42A and 42B in the housing 610 and the grooves 13A to 13D in the first and second support portions may have a polygonal (e.g. quadrangular) shape, a V-shape, or a U-shape.

When the second and third lens assemblies 622 and 624 are moved, occurrence of de-centering or tilting thereof may be prevented by the protrusions 44A to 44D of the housing 610 and the grooves 42A and 42B in the housing 610 and/or by the grooves 13A or 13D in the first and second support portions 29B and 39B. Accordingly, alignment between the plurality of lens arrays 49 and 59 may be properly maintained, whereby change in field of view or occurrence of defocusing may be prevented. As a result, the image quality or resolution of the camera device 100 may be greatly improved.

The actuator 100 may include rolling members B1 to B8 disposed between the housing 610 and the lens unit 620. The rolling members B1 to B8 may be in contact with the housing 610 and the lens unit 620. For example, the rolling members B1 to B8 may be disposed between the side portions 141-1 and 141-2 of the housing 610 and the support portions 29B and 39B of the lens unit 620. The rolling members B1 to B8 may be in contact with the side portions 141-1 and 141-2 of the housing 610 and the support portions 29B and 39B of the lens unit 620.

For example, the rolling members B1 to B8 may be disposed between the inner surfaces (or the grooves 42A and 42B) of the side portions 141-1 and 141-2 of the housing 610 and the grooves 13A to 13D in the support portions 29B and 39B. The rolling members B1 to B8 may be in contact with the inner surfaces (or the grooves 42A and 42B) of the side portions 141-1 and 141-2 of the housing 610 and the grooves 13A to 13D in the support portions 29B and 39B.

The rolling members B1 to B8 may alternatively be referred to as "ball members", "balls", or "ball bearings". For example, the rolling members B1 to B8 may include at least one ball. Each of the balls B1 to B8 may have a circular shape and may have a diameter sufficient to support movement of the lens unit 620. In another embodiment, the rolling members may have a roller shape. For example, the rolling members B1 to B8 may be made of metal, plastic, or resin.

The rolling members B1 to B8 may support the lens unit 620. When the lens unit 620 is moved in the first direction, the rolling members B1 to B8 may roll between the lens unit 620 and the housing 610, thereby reducing friction between the lens unit 620 and the housing 610. That is, due to the rolling motion of the rolling members B1 to B8, the lens unit 620 may be moved in the first direction in a sliding manner along the guide portion 43 of the housing 610 in a state of contacting the rolling members B1 to B8.

For example, the rolling members may include first rolling members B1 to B4 and second rolling members B5 to B8. The first rolling members B1 to B4 may be disposed between the guide portion 43 of the housing 610 and the second lens assembly 622 (e.g. the first support portion 29B). The second rolling members B5 to B8 may be disposed between the guide portion 43 of the housing 610 and the third lens assembly 624 (e.g. the second support portion 39B).

Next, the driver 630 will be described.

The driver 630 may move the second lens assembly 622 in the first direction, and may move the third lens assembly 624 in the first direction. For example, the driver 630 may move at least one lens group, e.g. the second lens group or the third lens group, in the first direction or the optical-axis direction.

The driver 630 may include a magnet 130 disposed on the lens unit 620 and a coil 120 disposed in the housing 610. In another embodiment, the magnet may be disposed in the housing, and the coil may be disposed on the lens unit.

The coil 120 may include a first coil 120A disposed on the first side portion 141-1 of the housing 610 and a second coil 120B disposed on the second side portion 141-2 of the housing 610.

The first coil 120A may include a plurality of coil units. For example, the plurality of coil units of the first coil 120A may be sequentially disposed or arranged in the first direction. For example, the plurality of coil units of the first coil 120A may be disposed or arranged so as to be spaced apart from each other at regular intervals. In another embodiment, the plurality of coil units of the first coil may be sequentially or continuously disposed or arranged so as to be in contact with each other.

As shown in FIGs. 5A and 5B, the first coil 120A may include six coil units 31 to 36. In another embodiment, the first coil 120A may include three coil units 31 to 33. In still another embodiment, the first coil may include four or more coil units.

The second coil 120B may include a plurality of coil units. For example, the plurality of coil units of the second coil 120B may be sequentially disposed or arranged in the first direction. For example, the plurality of coil units of the second coil 120B may be disposed or arranged so as to be spaced apart from each other at regular intervals. In another embodiment, the plurality of coil units of the second coil may be sequentially or continuously disposed or arranged so as to be in contact with each other.

As shown in FIGs. 5A and 5B, the second coil 120B may include six coil units 41 to 46. In another embodiment, the second coil 120B may include three coil units 41 to 43. In still another embodiment, the second coil may include four or more coil units.

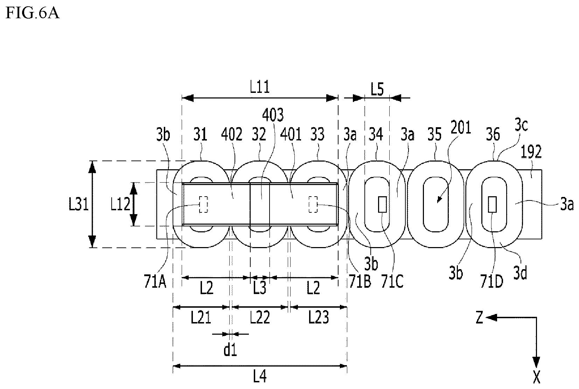

For example, referring to FIG. 6A, each of the coil units of the first coil 120A and the second coil 120B may have a closed curve or ring shape having a cavity (or a hole) 201 formed therein. For example, each of the coil units of the first coil 120A and the second coil 120B may be formed in the shape of a coil ring wound in the clockwise or counterclockwise direction with respect to (or about) the third axis parallel to the second direction (e.g. the Y-axis direction). For example, the cavity or the hole in each of the coil units of the first coil 120A may face the first magnet 130A in the second direction (e.g. the Y-axis direction). In addition, for example, the cavity or the hole in each of the coil units of the second coil 120B may face the second magnet 130B in the second direction (e.g. the Y-axis direction).

A first driving signal (e.g. a first current or a first voltage) may be applied to the first coil 120A, and a second driving signal (e.g. a second current or a second voltage) may be applied to the second coil 120B.

The magnet 130 may include a first magnet 130A disposed on or coupled to the second lens assembly 622 and a second magnet 130B disposed on or coupled to the third lens assembly 624.

For example, the first magnet 130A may be disposed on or coupled to the first lens holder 29 of the second lens assembly 622, and the second magnet 130B may be disposed on or coupled to the second lens holder 39 of the third lens assembly 624.

For example, the first magnet 130A may be disposed on or coupled to the first support portion 29B of the first lens holder 29. The second magnet 130B may be disposed on or coupled to the second support portion 39B of the second lens holder 39.

For example, each of the first and second magnets 130A and 130B may be a bipolar-magnetized magnet including two N poles and two S poles. In another embodiment, each of the first and second magnets may be a monopolar-magnetized magnet including one N pole and one S pole.

For example, the first magnet 130A may correspond to, face, or overlap at least three coil units among the coil units of the first coil 120A in the second direction (e.g. the Y-axis direction). In addition, for example, the second magnet 130B may correspond to, face, or overlap at least three coil units among the coil units of the second coil 120B in the second direction (e.g. the Y-axis direction).

The second lens assembly 622 may be moved in the first direction by electromagnetic force generated by interaction between the first coil 120A and the first magnet 130A. In addition, the third lens assembly 624 may be moved in the first direction by electromagnetic force generated by interaction between the second coil 120B and the second magnet 130B.

Movement of each of the second lens assembly 622 and the third lens assembly 624 may be controlled by controlling the first driving signal and the second driving signal. As movement of each of the second lens assembly 622 and the third lens assembly 624 is controlled, the position (or displacement) of each of the second lens assembly 622 and the third lens assembly 624 may be controlled, whereby the zoom function and the autofocus function of the camera device 200 may be performed.

The driver 630 may further include a first yoke 19A disposed on the first lens holder 29 and a second yoke 19B disposed on the second lens holder 39. The first yoke 19A may increase electromagnetic force generated by interaction between the first magnet 130A and the first coil 120A, and the second yoke 19B may increase electromagnetic force generated by interaction between the second magnet 130B and the second coil 120B. Since the driving force for movement of the lens unit 620 may be increased by the first and second yokes 19A and 19B, the amount of power consumed for the autofocus or zoom function may be reduced.

For example, the first yoke 19A may be disposed between the first magnet 130A and the first lens holder 29, and the second yoke 19B may be disposed between the second magnet 130B and the second lens holder 39. For example, the first yoke 19A may be disposed on the first support portion 29B, and the second yoke 19B may be disposed on the second support portion 39B.

For example, the first yoke 19A may include a body (or a first portion), which faces the first magnet 130A in the second direction (e.g. the Y-axis direction) and is coupled to the first lens holder 29, and an extended portion (or a second portion), which extends from the body and is disposed on one or more surfaces of the first magnet 130A.

The driver 630 may include a circuit board (or a board) 190 conductively connected to the coil 120. For example, the circuit board 190 may be a printed circuit board.

The circuit board 190 may be disposed in the housing 610. The circuit board 190 may include a first board 192, which is disposed on or coupled to the first side portion 141-1 of the housing 610, and a second board 194, which is disposed on or coupled to the second side portion 141-2 of the housing 610.

The first coil 120A may be disposed or mounted on a first surface of the first board 192. In this case, the first surface of the first board 192 may be a surface facing the first side portion 141-1 of the housing 610 in the second direction (e.g. the Y-axis direction). The second coil 120B may be disposed or mounted on a first surface of the second board 194. In this case, the first surface of the second board 194 may be a surface facing the second side portion 141-2 of the housing 610 in the second direction (e.g. the Y-axis direction).

The first board 192 may be conductively connected to the first coil 120A. In addition, the first board 192 may include a plurality of terminals (not shown). For example, the plurality of terminals of the first board 192 may be formed on a second surface of the first board 192. For example, the second surface of the first board 192 may be a surface opposite the first surface of the first board 192.

The second board 194 may be conductively connected to the second coil 120B. For example, the second board 194 may include a plurality of terminals (not shown). For example, the plurality of terminals of the second board 194 may be formed on a second surface of the second board 194. For example, the second surface of the second board 194 may be a surface opposite the first surface of the second board 194.

The driver 630 may further include a third yoke 48 (refer to FIG. 5A) disposed on the second surface of the first board 192 and a fourth yoke 49 disposed on the second surface of the second board 194. The fourth yoke may have the same shape as the third yoke. The third yoke 48 and the fourth yoke 49 may increase electromagnetic force generated by interaction between the magnet 130 and the coil 120.

The driver 630 may include a position sensor 170 in order to perform feedback driving for accurate zoom and AF operation.

The position sensor 170 may include a first position sensor 170A configured to detect the position or displacement of the second lens assembly 622 and a second position sensor 170B configured to detect the position or displacement of the third lens assembly 624.

For example, the first position sensor 170A may be disposed or mounted on the first board 192 and may be conductively connected to the first board 192. The second position sensor 170B may be disposed or mounted on the second board 194 and may be conductively connected to the second board 194.

For example, the first position sensor 170A may be disposed on, coupled to, or mounted on the first surface of the first board 192, and the second position sensor 170B may be disposed on, coupled to, or mounted on the first surface of the second board 194.

The first position sensor 170A may include a first sensor 71A and a second sensor 71B. For example, the first sensor 71A and the second sensor 71B may be arranged so as to be spaced apart from each other in the first direction. For example, the first sensor 71A may be disposed in the cavity in one coil unit (e.g. 31) among the first to third coil units 31 to 33. For example, the second sensor 71B may be disposed in the cavity in another coil unit (e.g. 33) among the first to third coil units 31 to 33. In another embodiment, each of the two sensors 71A and 71B may be disposed in a corresponding one of two adjacent coil units among the first to third coil units 31 to 33.

In addition, the first position sensor 170A may include a third sensor 71C and a fourth sensor 71D. For example, the third sensor 71C and the fourth sensor 71D may be arranged so as to be spaced apart from each other in the first direction. For example, the third sensor 71C may be disposed in the cavity in one coil unit (e.g. 34) among the fourth to sixth coil units 34 to 36. For example, the fourth sensor 71D may be disposed in the cavity in another coil unit (e.g. 36) among the fourth to sixth coil units 34 to 36. In another embodiment, each of the two sensors 71C and 71D may be disposed in a corresponding one of two adjacent coil units among the fourth to sixth coil units 34 to 36.

The second position sensor 170B may include a first sensor 72A and a second sensor 72B. For example, the first sensor 72A and the second sensor 72B may be arranged so as to be spaced apart from each other in the first direction. For example, the first sensor 72A may be disposed in the cavity in one coil unit (e.g. 41) among the first to third coil units 41 to 43. For example, the second sensor 72B may be disposed in the cavity in another coil unit (e.g. 43) among the first to third coil units 41 to 43. In another embodiment, each of the two sensors 72A and 72B may be disposed in a corresponding one of two adjacent coil units among the first to third coil units 41 to 43.

In addition, the second position sensor 170B may include a third sensor 72C and a fourth sensor 72D. For example, the third sensor 72C and the fourth sensor 72D may be arranged so as to be spaced apart from each other in the first direction. For example, the third sensor 72C may be disposed in the cavity in one coil unit (e.g. 44) among the fourth to sixth coil units 44 to 46. For example, the fourth sensor 72D may be disposed in the cavity in another coil unit (e.g. 46) among the fourth to sixth coil units 44 to 46. In another embodiment, each of the two sensors 72C and 72D may be disposed in a corresponding one of two adjacent coil units among the fourth to sixth coil units 44 to 46.

For example, each of the first to fourth sensors 71A to 71D of the first position sensor 170A may be a Hall sensor or a tunnel magnetoresistance (TMR) sensor. In addition, each of the first to fourth sensors 72A to 72D of the second position sensor 170B may be a Hall sensor or a TMR sensor. For example, the TMR sensor may be a TMR linear magnetic field sensor.

In another embodiment, at least one of the first to fourth sensors may be a driver IC including a Hall sensor.

For example, each of the first to fourth sensors 71A to 71D may include two input terminals, to which a driving signal (or a driving current) is supplied, and two output terminals to output an output signal (e.g. an output voltage).

For example, the two output terminals of the first sensor 71A and the two output terminals of the second sensor 71B may be connected in parallel to each other. In addition, for example, the two output terminals of the third sensor 71C and the two output terminals of the fourth sensor 71D may be connected in parallel to each other.

For example, the parallel-connected output terminals of the first and second sensors 71A and 71B and the parallel-connected output terminals of the third sensor 71C and the fourth sensor 71D may be connected to each other in series. That is, the output voltages of the first and second sensors 71A and 71B connected in parallel to each other and the output voltages of the third and fourth sensors 71C and 71D connected in parallel to each other may be summed. The displacement or position of the first magnet 130A or the second lens assembly 622 may be detected using the sum of the output voltages (or a final output voltage).

In another embodiment, each of the first to fourth sensors 71A to 71D may output an output signal (or an output voltage), and the displacement or position of the first magnet 130A or the second lens assembly 622 may be detected using one or more output signals among the output signals output from the first to fourth sensors 71A to 71D.

The description of the output signals from the first to fourth sensors 71A to 71D and the connection relationship between the output terminals thereof may be equally or similarly applied to the first to fourth sensors 72A to 72D of the second position sensor 170B.

For example, the first position sensor 170A may face or overlap the first magnet 130A in the second direction (e.g. the Y-axis direction) within the stroke range of the second lens assembly 622 (or the first lens holder 29) in the first direction.

For example, the second position sensor 170B may face or overlap the second magnet 130B in the second direction (e.g. the Y-axis direction) within the stroke range of the third lens assembly 624 (or the second lens holder 39) in the first direction.

The first position sensor 170A may detect the intensity of the magnetic field of the first magnet 130A. For example, the first position sensor 170A may detect movement of the first magnet 130A (or the second lens assembly 622) in the optical-axis direction. For example, the displacement or position of the first magnet 130A or the second lens assembly 622 may be detected using the final output voltage of the first position sensor 170A. Alternatively, the displacement or position of the first magnet 130A or the second lens assembly 622 may be detected using one or more output signals among the output signals output from the first to fourth sensors 71A to 71D.

The second position sensor 170B may detect the intensity of the magnetic field of the second magnet 130B. For example, the second position sensor 170B may detect movement of the second magnet 130B (or the third lens assembly 624) in the optical-axis direction. For example, the displacement or position of the second magnet 130B or the third lens assembly 624 may be detected using the final output voltage of the second position sensor 170B. Alternatively, the displacement or position of the second magnet 130B or the third lens assembly 624 may be detected using one or more output signals among the output signals output from the first to fourth sensors 72A to 72D.

As shown in FIGs. 5A and 5B, each of the first position sensor 170A and the second position sensor 170B includes four sensors. However, in another embodiment, each of the first position sensor and the second position sensor may include one or more sensors.

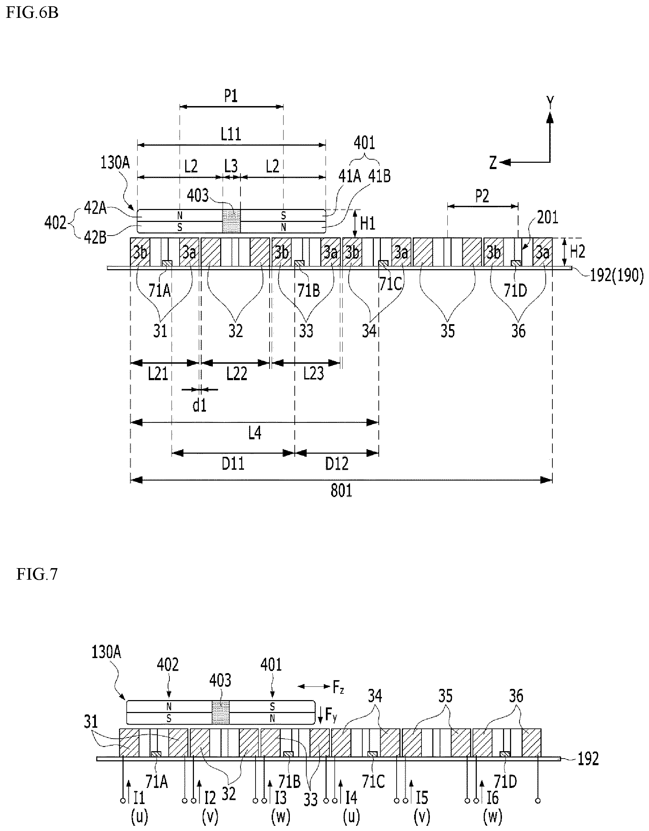

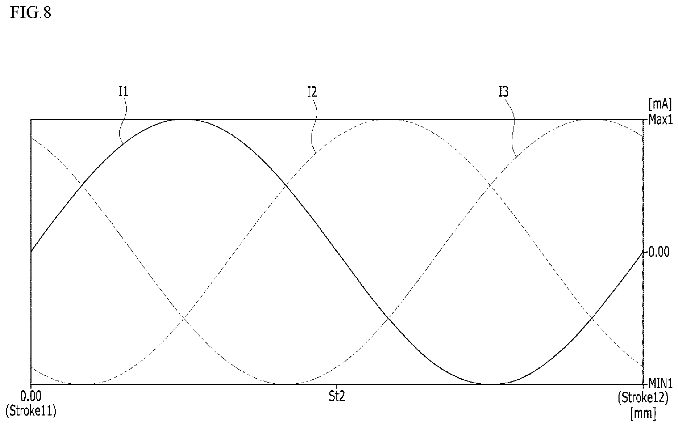

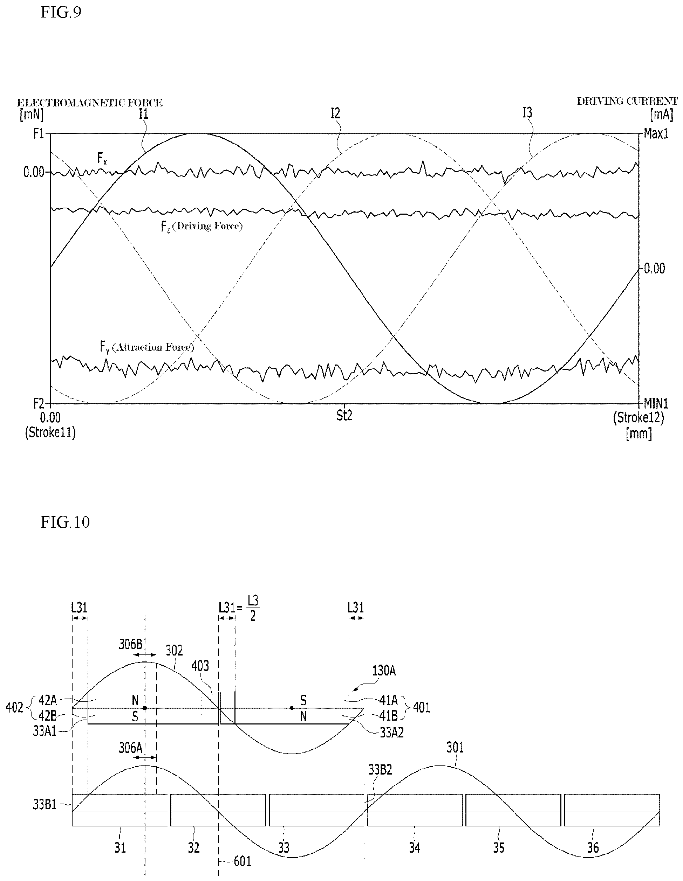

FIG. 6A is a plan view of the coil units 31 to 33 of the first coil 120A and the position sensors 71 (71A to 71D), FIG. 6B is a schematic cross-sectional view of the first magnet 130A and the coil units 31 to 36 of the first coil 120A, FIG. 7 illustrates driving signals supplied to the coil units 31 to 33 of the first coil 120A, FIG. 8 illustrates first to third driving signals supplied to the first to third coil units 31 to 33, FIG. 9 illustrates electromagnetic force between the first to third coil units 31 to 33, to which the first to third driving signals are supplied, and the first magnet 130A, and FIG. 10 illustrates magnetic force generated from the first to sixth coil units 31 to 36, to which the first to third driving signals are supplied, and magnetic force generated from the first magnet 130A.

Referring to FIGs. 6A and 6B, the first magnet 130A may be a bipolar-magnetized magnet or a 4-pole magnet, which includes two N poles and two S poles. For example, the first magnet 130A may include a first magnet part 401, a second magnet part 402, and a partition wall 403 disposed between the first magnet part 401 and the second magnet part 402. Here, the magnet part may alternatively be referred to as a "magnet unit", and the partition wall 403 may alternatively be referred to as a "non-magnetic partition wall".

The first magnet part 401 may include a first polarity area 41A and a second polarity area 41B. For example, the first polarity area 41A may be an S pole (or an N pole), and the second polarity area 41B may be an N pole (or an S pole). In addition, the first magnet part 401 may include a first interface portion between the first polarity area 41A and the second polarity area 41B. The first interface portion may be a portion that has substantially no magnetism and includes a zone having almost no polarity, and may be a portion that is naturally generated in order to form a magnet composed of one N pole and one S pole.

The second magnet part 402 may include a third polarity area 42A and a fourth polarity area 42B. For example, the third polarity area 42A may be an N pole (or an S pole), and the fourth polarity area 42B may be an S pole (or an N pole). In addition, the second magnet part 402 may include a second interface portion between the third polarity area 42A and the fourth polarity area 42B. The second interface portion may be a portion that has substantially no magnetism and includes a zone having almost no polarity, and may be a portion that is naturally generated in order to form a magnet composed of one N pole and one S pole.

The partition wall 403 may be a portion that separates or isolates the first magnet part 401 and the second magnet part 402 from each other and has substantially no magnetism or almost no polarity. For example, the partition wall may be implemented as a non-magnetic material, a gap, or air. For example, the partition wall may be referred to as a "neutral zone" or a "neutral section".

The partition wall 403 may be a portion that is artificially formed when the first magnet part 401 and the second magnet part 402 are magnetized. The width of the partition wall 403 may be larger than the width of the first interface portion (or the width of the second interface portion). Here, the width of the partition wall 403 may be a length thereof in a direction from the first magnet part 401 toward the second magnet part 402. The width of the first interface portion (or the second interface portion) may be a length of the first interface portion (or the second interface portion) in a direction from the N pole toward the S pole of each of the first and second magnet parts 401 and 402.

The first magnet part 401 and the second magnet part 402 may be disposed in the first direction, with the partition wall 403 interposed therebetween. For example, the first magnet part 401 and the second magnet part 402 may be disposed so as to face each other in the first direction, with the partition wall 403 interposed therebetween.

The first magnet part 401 and the second magnet part 402 may be disposed such that the opposite polarities thereof face each other in the optical-axis direction. For example, the first magnet part 401 and the second magnet part 402 may be disposed so as to face or overlap each other in the optical-axis direction. In addition, for example, the N pole and the S pole of each of the first magnet part 401 and the second magnet part 402 may be disposed so as to face or overlap each other in the second direction (e.g. the Y-axis direction).

For example, the N pole of the first magnet part 401 may be disposed closer to the coil units 31 to 36 of the first coil 120A than the S pole of the first magnet part 401, and the S pole of the second magnet part 402 may be disposed closer to the coil units 31 to 36 of the first coil 120A than the N pole of the second magnet part 402. However, in another embodiment, the position of the N pole and the position of the S pole may be interchanged.

In another embodiment, the first magnet part and the second magnet part of the first magnet may be disposed so as to face each other in the second direction (e.g. the Y-axis direction) or the third direction (e.g. the X-axis direction).

In another embodiment, the first magnet may be a 2-pole magnet including one N pole and one S pole. For example, one N pole and one S pole of the first magnet may be disposed so as to face each other in the optical-axis direction. In still another embodiment, one N pole and one S pole of the first magnet may be disposed so as to face each other in the second direction (e.g. the Y-axis direction).

The description of the first magnet 130A may be equally or similarly applied to the second magnet 130B.

The first magnet 130A may overlap three adjacent coil units among the coil units 31 to 36 of the first coil 120A in the second direction (e.g. the Y-axis direction).

For example, the length L11 of the first magnet 130A in the first direction may be less than the overall length L4 of three adjacent coil units (e.g. 31 to 33) in the first direction (L11 < L4). For example, the overall length L4 may be a value obtained by summing the individual lengths L21, L22, and L23 of the three adjacent coil units in the optical-axis direction and spacing distances d1 between the coil units.

For example, "L11" may be less than the sum of the individual lengths of three adjacent coil units (e.g. 31 to 33) in the first direction.

For example, the length L11 of the first magnet 130A in the first direction may be greater than the overall length of two adjacent coil units (e.g. 31 and 32) in the first direction among the plurality of coil units 31 to 36. For example, the overall length of two adjacent coil units (e.g. 31 and 32) in the first direction may be a value obtained by summing the individual lengths of the two adjacent coil units in the optical-axis direction and a spacing distance between the adjacent coil units. For example, "L11" may be greater than the sum of the individual lengths of two adjacent coil units (e.g. 31 and 32) in the first direction.

In another embodiment, the length L11 of the first magnet 130A in the first direction may be equal to the overall length L4 of three adjacent coil units (e.g. 31 to 33) in the first direction.

For example, the length L11 of the first magnet 130A in the first direction may be less than a value obtained by summing the individual lengths (e.g. L21, L22, and L23) of three adjacent coil units in the first direction. In another embodiment, the length L11 of the first magnet 130A in the first direction may be equal to a value obtained by summing the individual lengths (e.g. L21, L22, and L23) of three adjacent coil units in the first direction.

The length L11 of the first magnet 130A in the first direction may be greater than the sum of the individual lengths of two coil units in the first direction among three adjacent coil units.

For example, the length L11 of the first magnet 130A in the first direction may be greater than the length L12 of the first magnet 130A in the third direction (e.g. the X-axis direction) (L11 > L12).

For example, the length L12 of the first magnet 130A in the third direction (e.g. the X-axis direction) may be less than the length L31 of the coil unit of the first coil 120A in the third direction (e.g. the X-axis direction) (L12 < L31). In another embodiment, the length L12 of the first magnet 130A in the third direction (e.g. the X-axis direction) may be equal to or greater than the length L31 of the coil unit of the first coil 120A in the third direction (e.g. the X-axis direction).

For example, the coil units 31 to 36 of the first coil 120A may have the same shape. In addition, for example, the coil units 31 to 36 of the first coil 120A may have the same number of windings (or number of turns). For example, the individual lengths L21, L22, and L23 of the coil units 31 to 36 of the first coil 120A in the first direction may be identical. In addition, for example, the lengths H2 of the coil units 31 to 33 of the first coil 120A in the second direction (e.g. the Y-axis direction) may be identical. In another embodiment, the number of windings, the length in the first direction, or the length in the second direction of at least one of the coil units of the first coil may be different from those of the other coil units of the first coil.

For example, the length L31 of each of the coil units of the first coil 120A in the third direction (e.g. the X-axis direction) may be greater than the length L21 thereof in the first direction (L31 > L21). In another embodiment, the length of each of the coil units in the third direction (e.g. the X-axis direction) may be equal to or less than the length thereof in the first direction.

For example, the length L2 of one polarity area of the first magnet 130A in the first direction may be greater than the length L21, L22, or L23 of the coil unit (e.g. 31) of the first coil 120A in the first direction (L2 > L21, L2 > L22, or L2 > L23).

For example, the length L2 of the first magnet part 401 in the first direction may be greater than the length L21, L22, or L23 of the coil unit (e.g. 31) of the first coil 120A in the first direction. For example, the length L2 of the first magnet part 401 in the first direction may be greater than the length L21, L22, or L23 of each of the coil units (e.g. 31 to 36) of the first coil 120A in the first direction.

In addition, for example, the length L2 of the second magnet part 402 in the first direction may be greater than the length L21, L22, or L23 of the coil unit (e.g. 31) of the first coil 120A in the first direction. For example, the length L2 of the second magnet part 402 in the first direction may be greater than the length L21, L22, or L23 of each of the coil units (e.g. 31 to 36) of the first coil 120A in the first direction.

For example, the length H1 of the first magnet 130A in the second direction (e.g. the Y-axis direction) may be less than the length H2 of the coil unit of the first coil 120A in the second direction (H1 < H2). In another embodiment, the length H1 of the first magnet 130A in the second direction (e.g. the Y-axis direction) may be equal to or greater than the length H2 of the coil unit of the first coil 120A in the second direction (e.g. the Y-axis direction).

For example, the length L3 of the partition wall 403 of the first magnet 130A in the first direction may be less than the length L5 of the cavity 201 in the coil unit of the first coil 120A in the first direction. In another embodiment, the length L3 of the partition wall 403 in the first direction may be equal to or greater than the length L5 of the cavity 201 in the coil unit of the first coil 120A in the first direction.

For example, the length L3 of the partition wall 403 in the first direction may be greater than the spacing distance d1 between two adjacent coil units. In another embodiment, the length L3 of the partition wall 403 in the first direction may be equal to or less than the spacing distance d1 between two adjacent coil units.

For example, a first pitch P1 between the first magnet part 401 and the second magnet part 402 may be greater than a second pitch P2 between two adjacent coil units (P1 > P2). For example, the first pitch P1 may be a distance between the center of the first magnet part 401 and the center of the second magnet part 402. In addition, the second pitch P2 may be a distance between the center of the cavity 201 in one of the two adjacent coil units and the center of the cavity 210 in the other of the two adjacent coil units. In another embodiment, the first pitch may be equal to or less than the second pitch.

For example, referring to FIGs. 6A and 6B, the sensors 71A and 71B of the first position sensor 170A may be disposed in the cavities in the first coil unit 31 and the third coil unit 33 among the three adjacent coil units 31 to 33.

Referring to FIG. 6B, a range within which the first magnet 130A and the coil units 31 to 36 may overlap each other in the second direction (e.g. the Y-axis direction) may be set to a stroke range 801 of the first magnet 130A. In the case in which the sensor is disposed in the cavity in the second coil unit 32, when the first magnet 130A is located close to one side of the stroke range, the sensor overlaps the partition wall 403 of the first magnet 130A in the second direction (e.g. the Y-axis direction), which may deteriorate the linearity of output of the sensor, thus degrading the position detection performance of the first position sensor. This problem may also occur when the first magnet 130A is located close to the other side of the stroke range. For this reason, the sensors 71C and 71D may be disposed in the cavities in the fourth coil unit 34 and the sixth coil unit 36 among the plurality of coil units 31 to 36.

For example, a distance D11 between the first sensor 71A and the second sensor 71B in the first direction may be different from a distance D12 between the second sensor 71B and the third sensor 71C in the first direction.

For example, "D11" may be greater than "D12". Each of "D11" and "D12" may be a spacing distance between two sensors or a distance between the centers of two sensors. Since "D12" is set to be less than "D11", when the first magnet 130A is located close to one end of a series of six coil units, the second sensor 71B may be located close to the center of the first magnet part 401 of the first magnet 130A. Accordingly, the sensitivity of the second sensor 71B may be improved, and the linearity of output of the second sensor 71B may be improved.

Referring to FIG. 6A, each of the coil units 31 to 36 may include a first straight portion 3a, a second straight portion 3b, a first curved portion 3c, and a second curved portion 3d. For example, the first straight portion 3a and the second straight portion 3b may face each other or may be located opposite each other in the first direction (e.g. the Z-axis direction). For example, the first curved portion 3c and the second curved portion 3d may face each other or may be located opposite each other in the third direction (e.g. the X-axis direction).

For example, the first curved portion 3c may interconnect one side of the first straight portion 3a and one side of the second straight portion 3b, and the second curved portion 3d may interconnect the other side of the first straight portion 3a and the other side of the second straight portion 3b.

Referring to FIG. 6B, for example, the first sensor 71A may be disposed close to the second coil unit 32 or on the right side with respect to the center or central axis of the cavity 201 in the first coil unit 31. For example, the first sensor 71A may be located closer to the first straight portion 3a of the first coil unit 31 than to the second straight portion 3b of the first coil unit 31. For example, the second coil unit 32 may be located closer to the first straight portion 3a of the first coil unit 31 than to the second straight portion 3b of the first coil unit 31.

For example, the second sensor 71B may be disposed close to the second coil unit 32 with respect to the center of the cavity 201 in the third coil unit 33. For example, the second sensor 71B may be disposed closer to the second coil unit 32 than to the fourth coil unit 34.

For example, the second sensor 71B may be located closer to the second straight portion 3b of the third coil unit 33 than to the first straight portion 3a of the third coil unit 33. For example, the second coil unit 32 may be located closer to the second straight portion 3b of the third coil unit 33 than to the first straight portion 3a of the third coil unit 33.

For example, the third sensor 71C may be disposed close to the fifth coil unit 35 with respect to the center of the cavity 201 in the fourth coil unit 34. For example, the third sensor 71C may be disposed closer to the fifth coil unit 35 than to the third coil unit 33.

For example, the third sensor 71C may be located closer to the first straight portion 3a of the fourth coil unit 34 than to the second straight portion 3b of the fourth coil unit 34. For example, the fifth coil unit 35 may be located closer to the first straight portion 3a of the fourth coil unit 34 than to the second straight portion 3b of the fourth coil unit 34.

For example, the fourth sensor 71D may be disposed close to the fifth coil unit 35 with respect to the center of the cavity 201 in the sixth coil unit 36. For example, the fourth sensor 71D may be located closer to the second straight portion 3b of the sixth coil unit 36 than to the first straight portion 3a of the sixth coil unit 36. For example, the fifth coil unit 35 may be located closer to the second straight portion 3b of the sixth coil unit 36 than to the first straight portion 3a of the sixth coil unit 36.

For example, a distance between the third sensor 71C and the fourth sensor 71D in the first direction may be equal to the distance D11 between the first sensor 71A and the second sensor 71B in the first direction.

In another embodiment, each of the first to fourth sensors 71A to 71D may be disposed at the center or in the middle of the cavity 201 in a corresponding one of the coil units 31 to 36.

A camera device according to another embodiment may include a sensor disposed in the cavity in each of the six coils.

As shown in FIGs. 6A and 6B, the sensor is disposed in the cavity in a corresponding coil unit. However, in another embodiment, the sensor may be disposed outside the cavity in a corresponding coil unit. Even if the sensor is disposed outside the cavity in a corresponding coil unit, at least a portion of the sensor may overlap at least a portion of the first magnet 130A in the second direction (e.g. the Y-axis direction) within the stroke range of the first magnet 130A in the first direction.

Referring to FIGs. 7 and 8, a first driving signal I1 may be supplied to any one (e.g. 31) of three adjacent coil units (e.g. 31 to 33) of the first coil 120A, a second driving signal 12 may be supplied to another one (e.g. 32) of the three adjacent coil units (e.g. 31 to 33) of the first coil 120A, and a third driving signal I3 may be supplied to the remaining one 33 of the three adjacent coil units (e.g. 31 to 33) of the first coil 120A.

The first to third driving signals I1 to I3 may be signals having different phases.

For example, alternating-current signals having different phases may be respectively supplied to the first to third coil units 31 to 33. For example, alternating currents having a phase difference of 120 degrees from each other may be respectively supplied to the first to third coil units 31 to 33.

The first to third driving signals I1 to I3 may be signals having a predetermined phase difference from each other. For example, the predetermined phase difference may be 120 degrees. For example, the first driving signal may be a U-phase driving current, the second driving signal may be a V-phase driving current, and the third driving signal may be a W-phase driving current.

For example, three-phase driving signals may be supplied to three adjacent coil units (e.g. 31 to 33). For example, the driving signals may be alternating currents. In another embodiment, the driving signals may be alternating-current voltages. For example, the first to third driving signals may be 3-phase sinusoidal signals. For example, the sinusoidal signal may be a sine wave signal or a cosine wave signal.

In another embodiment, the first to third driving signals may be pulse width modulation (PWM) signals. Alternatively, for example, each of the first to third driving signals may be a sinusoidal PWM signal.

Referring to FIGs. 6A and 9, for example, the direction of the current of the driving signals I1 to I3 flowing through the first to third coil units 31 to 33 may be clockwise (or counterclockwise) in a section having a positive (+) current value, and may be counterclockwise (or clockwise) in a section having a negative (-) current value.

In addition, a fourth driving signal I4 may be supplied to any one (e.g. 34) of the remaining three adjacent coil units (e.g. 34 to 36) of the first coil 120A, a fifth driving signal I5 may be supplied to another one (e.g. 35) of the three coil units (e.g. 34 to 36) of the first coil 120A, and a sixth driving signal I6 may be supplied to the remaining one 36 of the three coil units (e.g. 34 to 36) of the first coil 120A.

Three-phase driving currents may be supplied as the fourth to sixth driving signals I4 to I6, and the above description of the first to third driving signals I1 to I3 may be equally or similarly applied to the fourth to sixth driving signals I4 to I6. For example, the fourth driving signal I4 may be identical to the first driving signal I1, the fifth driving signal I5 may be identical to the second driving signal I2, and the sixth driving signal I6 may be identical to the third driving signal I3.

Referring to FIG. 9, when the three-phase driving currents I1 to I3 shown in FIG. 9 are supplied to the first to third coil units 31 to 33, first driving force (or first force) Fz may be generated in the first direction, and second driving force (or second force) Fy may be generated in the second direction (e.g. the Y-axis direction) by interaction with the first magnet 130A. In addition, driving force Fx or force in the third direction (e.g. the X-axis direction) may not be generated.

When the three-phase driving currents I1 to I3 are supplied to the first to third coil units 31 to 33, magnetic fields are formed in the coil units 31 to 33, and the first magnet 130A is located such that the magnetic fields formed in the coil units 31 to 33 and the first magnet 130A are synchronized. Since the driving currents I1 to I3 are alternating-current signals having different phases, the magnetic fields of the coil units 31 to 33 change. That is, positions at which the intensities of the magnetic fields of the coil units 31 to 33 are the strongest may change, and the first magnet 130A may move in synchronization with this position change.

Referring to FIG. 10, a waveform 301 indicates a sum of the intensities of the magnetic fields generated by the first to third coil units 31 to 33 when the three-phase driving currents I1 to I3 are supplied to the first to third coil units 31 to 33. The waveform 301 may be a sum of the intensities of the magnetic fields generated by the first to third coil units 31 to 33 when the first magnet 130A is located at a certain point within the stroke range.

As the current values of the driving currents I1 to I3 change, the waveform 301 also changes. For example, as the current values of the driving currents I1 to I3 change, the waveform 301 may be shifted in the first direction (306A). The waveform 302 shown in FIG. 10 indicates the intensity of the magnetic field of the first magnet 130A, and the waveform 301 and the waveform 302 may match each other or may be synchronized with each other. As the waveform 301 is shifted in the first direction (306A), the waveform 302 may be shifted in the first direction in synchronization with the waveform 301(306B).

When a straight line 601 that passes through the center of a series of three coil units 31 to 33 and is parallel to the second direction (e.g. the Y-axis direction) is aligned with the center of the first magnet 130A, a distance L31 between an end 33A1 or 33A2 of the first magnet 130A and an end 33B1 or 33B2 of a series of three coil units 31 to 33 in the first direction may be one half the length of the partition wall 403 of the first magnet 130A in the first direction. This configuration is made in order to synchronize the waveform 301 and the waveform 302 with each other.

For example, the center of a series of three coil units 31 to 33 may be the center of the cavity 201 in the second coil unit 32 disposed between the first coil unit 31 and the third coil unit 33.

For example, the center of the first magnet 130A may be the center of the partition wall 403.

The first magnet 130A may be moved in the first direction by the first driving force Fz. As shown in FIG. 9, the first driving force Fz varies slightly within the entire stroke range (0 to 9 mm) of the first magnet 130A. As the waveform 301 and the waveform 302 are synchronized with each other, variation in the first driving force Fz is not large, whereby uniform first driving force may be obtained.

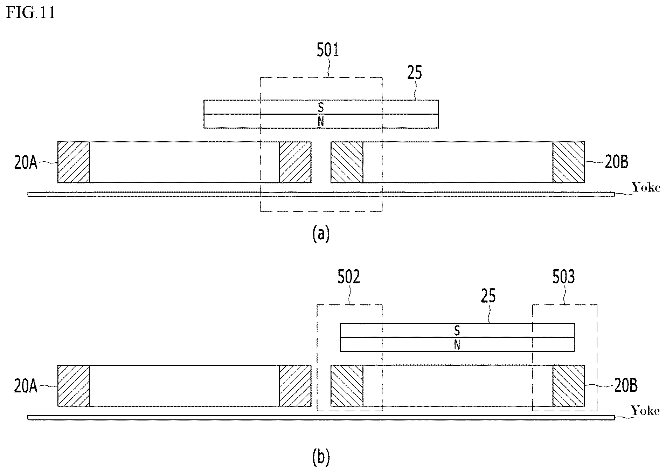

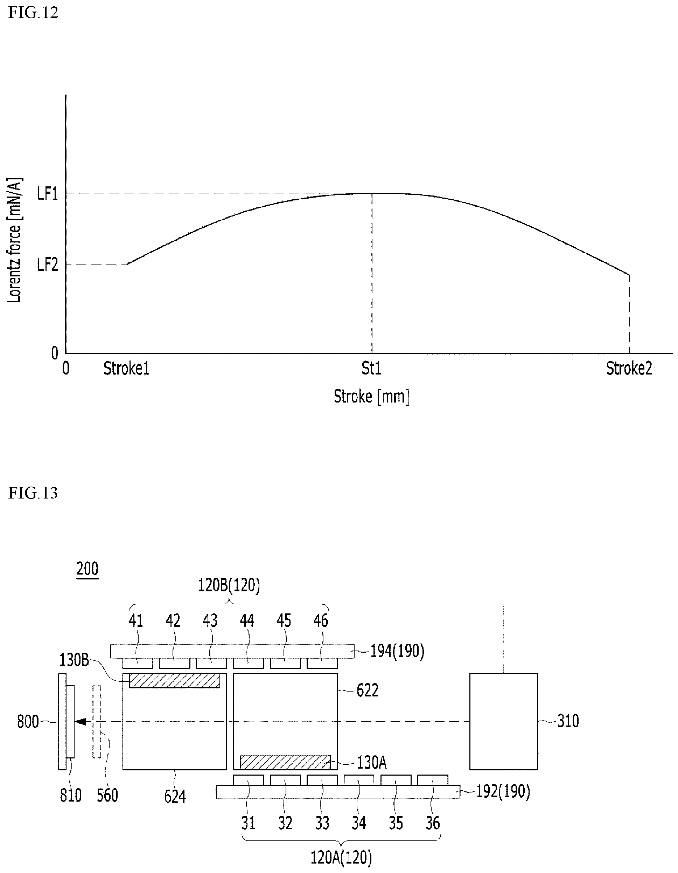

FIG. 11 illustrates disposition of two coil units 20A and 20B and a magnet 25 according to a comparative example, and FIG. 12 illustrates the Lorentz force generated by interaction between the coil units 20A and 20B and the magnet 25 shown in FIG. 11. Currents (e.g. direct currents) having mutually opposite directions may be supplied to the two coil units 20A and 20B.

The case shown in FIG. 11(a) may be a case in which the center of the magnet 25 is located between the two coil units 20A and 20B or is located close to the center of a series of two coil units 20A and 20B. That is, the case shown in FIG. 11(a) may be a case in which the magnet 25 is located in the middle (St1 [mm] in FIG. 12) of the stroke range of the magnet 25.

The case shown in FIG. 11(b) may be a case in which the magnet 25 is located close to an end of one coil unit 20B among the two coil units 20A and 20B. The case shown in FIG. 11(b) may be a case in which the magnet 25 is located at one end (Stroke1 or Stroke2 in FIG. 12) of the stroke range of the magnet 25.

In FIG. 11(a), a region 501 in which actual force is generated may include a portion of the magnet 25, a portion of the first coil unit 20A, and a portion of the second coil unit 20B. In FIG. 11(a), force generated by the magnet 25 and the first coil unit 20A and force generated by the magnet 25 and the second coil unit 20B may be combined into a greater amount of force, whereby the driving force may be maximized.

In FIG. 11(b), regions 502 and 503 in which actual force is generated may include a portion of the magnet 25, a portion of the second coil unit 20B, another portion of the magnet 25, and another portion of the second coil unit 20B. Because the current direction in a portion of the second coil unit 20B and the current direction in another portion of the second coil unit 20B are opposite each other, force generated by a portion of the magnet 25 and a portion 502 of the second coil unit 20B and force generated by another portion 503 of the magnet 25 and another portion of the second coil unit 20B may cancel each other out, whereby the driving force may be reduced.

Referring to FIG. 12, the Lorentz force LF1 generated when the magnet 25 is located in the middle (St1 [mm]) of the stroke range and the Lorentz force LF2 generated when the magnet 25 is located at one end (e.g. Stroke1 or Stroke2) of the stroke range have a large difference therebetween. That is, because the amount of force generated between the magnet 25 and the coil units 20A and 20B at one end (e.g. Stroke1 or Stroke2) of the stroke range is small, the stability and reliability of control of movement of the moving unit in the first direction may be reduced.

In the embodiment, movement of the second lens assembly 622 may be controlled with constant or uniform driving force within the stroke range of the first magnet 130A or the stroke range of the second lens assembly 622.

Referring to FIG. 9, in the embodiment, the first driving force Fz generated by the first magnet 130A and the coil units 31 to 33 at the center St2 of the stroke range of the first magnet 130A and the first driving force Fz generated at one end Stroke11 or Stroke12 of the stroke range have a very small difference in magnitude therebetween. Accordingly, in the embodiment, it is possible to obtain uniform driving force for movement of the second lens assembly 622 in the optical-axis direction and to improve accuracy of control of movement of the second lens assembly 622 in the optical-axis direction.

As described above with reference to FIGs. 6 to 9, according to the embodiment, the first magnet 130A and the three coil units 31 to 33, to which three-phase driving currents I1 to I3 are supplied, have proper sizes and disposition relationship therebetween so that variation in the first driving force Fz is not large. Accordingly, uniform first driving force may be obtained, and as a result, accuracy of zoom operation of the second lens assembly 622 may be improved.

In addition, in the embodiment, since the six coil units 31 to 36 are sequentially disposed in the first direction, the movable distance of the first magnet 130A may be increased, and accordingly, the stroke range of the second lens assembly 622 for zoom operation may be increased.

The description of the first coil 120A and the first magnet 130A may be equally or similarly applied to the second coil 120B and the second magnet 130B. Accordingly, in the embodiment, movement of the third lens assembly 624 may be controlled with constant or uniform driving force within the stroke range of the second magnet 130B or the stroke range of the third lens assembly 624. In the embodiment, the first driving force Fz generated by the second magnet 130B and the coil units 41 to 43 at the center of the stroke range of the second magnet 130B and the first driving force Fz generated at any one of both ends of the stroke range have a very small difference in magnitude therebetween. Accordingly, in the embodiment, it is possible to obtain uniform driving force for movement of the third lens assembly 624 in the optical-axis direction and to improve accuracy of control of movement of the third lens assembly 624 in the optical-axis direction.

As can be seen from the above description of FIGs. 6 to 9, according to the embodiment, the second magnet 130B and the three coil units 41 to 43, to which three-phase driving currents are supplied, have proper sizes and disposition relationship therebetween so that variation in the first driving force Fz is not large. Accordingly, uniform first driving force may be obtained, and as a result, accuracy of focusing operation of the third lens assembly 624 may be improved.

In addition, in the embodiment, since the six coil units 41 to 46 of the second coil 120B are sequentially disposed in the first direction, the movable distance of the second magnet 130B may be increased, and accordingly, the stroke range of the third lens assembly 624 for focusing operation may be increased.

FIG. 13 is a schematic diagram of the camera device 200 according to the embodiment.

Referring to FIG. 13, the camera device 200 may include the actuator 100 according to the embodiment and an image sensor 810.

The image sensor 810 may receive and detect light that has passed through the lens unit 620, and may convert the detected light into an electrical signal. For example, the image sensor 810 may include an imaging area to detect light. Here, the imaging area may alternatively be referred to as an "effective area", a "light-receiving area", or an "active area". For example, the imaging area may include a plurality of pixels on which an image is formed.

The image sensor 810 may be located behind the third lens assembly 624. For example, the image sensor 810 may be disposed so as to face the third lens array 59 of the third lens assembly 624 in the first direction.

The camera device 200 may further include a filter 560 disposed between the image sensor and the lens unit 620 so as to face the image sensor in the first direction.

The filter 560 may serve to prevent light within a specific frequency band, having passed through the lens unit 620, from being introduced into the image sensor 810. The filter 560 may be, for example, an infrared cut filter, but the disclosure is not limited thereto. For example, the filter 560 may be disposed parallel to the x-y plane perpendicular to the first direction.

The camera device 200 may further include a circuit board 800, on which the image sensor 810 is disposed or mounted. The image sensor 810 may be conductively connected to the circuit board 800.

The camera device 200 may further include an actuator 310 for OIS driving.

The actuator 310 may be disposed in front of the actuator 100. The actuator 310 may change an optical path. For example, the actuator 310 may include an optical member configured to change an optical path. The optical member may include a reflector capable of changing a traveling direction of light. For example, the optical member may be a prism configured to reflect light, but the disclosure is not limited thereto. In another embodiment, the optical member may be a mirror. The optical member may change an optical path of the incident light to the optical axis parallel to the central axis Z of the lens unit 620 to convert the incident light into parallel light, and the parallel light may reach the image sensor 810 via the first lens assembly 640, the second lens assembly 622, and the third lens assembly 624.

For example, the actuator 310 may move the optical member, thereby performing optical image stabilization (OIS) operation for hand-tremor compensation. For example, the actuator 310 may rotate the optical member with respect to the X-axis or the Y-axis, and may move an image formed on the image sensor 810 in the X-axis direction or the Y-axis direction. The actuator 310 may include a coil and a magnet to move the optical member.

In addition, the camera device 200 according to the embodiment may be included in an optical instrument for the purpose of forming an image of an object present in a space using reflection, refraction, absorption, interference, and diffraction, which are characteristics of light, for the purpose of increasing visibility, for the purpose of recording and reproduction of an image using a lens, or for the purpose of optical measurement or image propagation or transmission. For example, the optical instrument according to the embodiment may be a cellular phone, a mobile phone, a smartphone, a portable smart device, a digital camera, a laptop computer, a digital broadcasting terminal, a personal digital assistant (PDA), a portable multimedia player (PMP), a navigation device, etc., without being limited thereto, and may also be any of devices for capturing images or pictures.

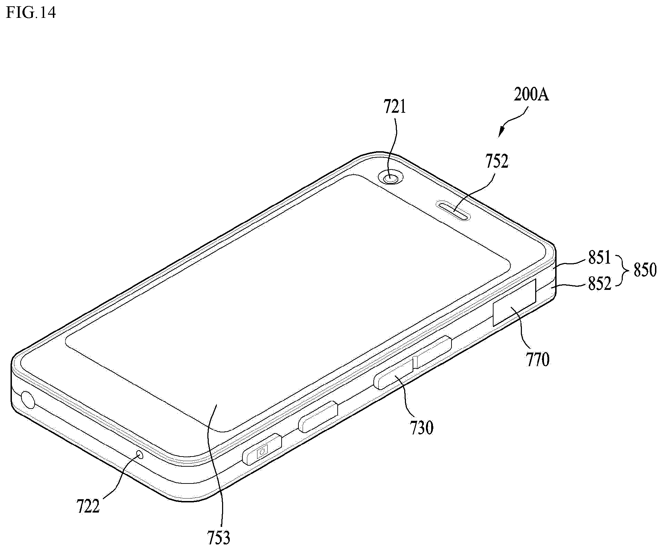

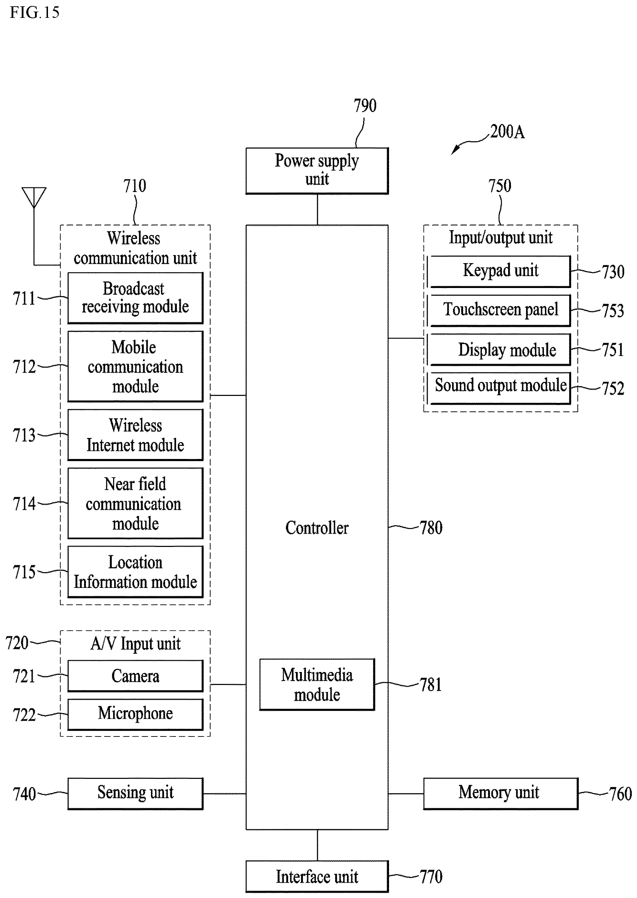

FIG. 14 is a perspective view of the optical instrument 200A according to the embodiment, and FIG. 15 is a configuration diagram of the optical instrument 200A shown in FIG. 14.

Referring to FIGs. 14 and 15, the optical instrument 200A (hereinafter referred to as a "portable terminal") may include a body 850, a wireless communication unit 710, an A/V input unit 720, a sensing unit 740, an input/output unit 750, a memory unit 760, an interface unit 770, a controller 780, and a power supply 790.

The body 850 shown in FIG. 14 may have a bar shape, without being limited thereto, and may be any of various types such as, for example, a slide type, a folder type, a swing type, or a swivel type, in which two or more sub-bodies are coupled so as to be movable relative to each other.

The body 850 may include a case (a casing, a housing, a cover, or the like) defining the external appearance thereof. In an example, the body 850 may be divided into a front case 851 and a rear case 852. A variety of electronic components of the terminal may be mounted in the space defined between the front case 851 and the rear case 852.

The wireless communication unit 710 may include one or more modules, which enable wireless communication between the terminal 200A and a wireless communication system or between the terminal 200A and a network in which the terminal 200A is located. In an example, the wireless communication unit 710 may include a broadcast receiving module 711, a mobile communication module 712, a wireless Internet module 713, a nearfield communication module 714, and a location information module 715.

The audio/video (A/V) input unit 720 serves to input audio signals or video signals, and may include a camera 721 and a microphone 722.

The camera 721 may include the camera device 200 according to the embodiment.

The sensing unit 740 may sense the current state of the terminal 200A, such as the open or closed state of the terminal 200A, the position of the terminal 200A, the presence or absence of a user's touch, the orientation of the terminal 200A, or the acceleration/deceleration of the terminal 200A, and may generate a sensing signal to control the operation of the terminal 200A. For example, when the terminal 200A is a slide-type phone, whether the slide-type phone is open or closed may be detected. In addition, the sensor serves to sense whether power is supplied from the power supply 790 or whether the interface unit 770 is coupled to an external device.

The input/output unit 750 serves to generate visual, audible, or tactile input or output. The input/output unit 750 may generate input data to control the operation of the terminal 200A, and may display information processed in the terminal 200A.

The input/output unit 750 may include a keypad unit 730, a display module 751, a sound output module 752, and a touchscreen panel 753. The keypad unit 730 may generate input data in response to input to a keypad.

The display module 751 may include a plurality of pixels, the color of which varies in response to electrical signals. In an example, the display module 751 may include at least one of a liquid crystal display, a thin-film transistor liquid crystal display, an organic light-emitting diode, a flexible display, or a 3D display.

The sound output module 752 may output audio data received from the wireless communication unit 710 in a call-signal reception mode, a call mode, a recording mode, a voice recognition mode, or a broadcast reception mode, or may output audio data stored in the memory unit 760.

The touchscreen panel 753 may convert variation in capacitance, caused by a user's touch on a specific region of a touchscreen, into electrical input signals.

The memory unit 760 may store programs for processing and control of the controller 780, and may temporarily store input/output data (e.g. a phone book, messages, audio, still images, pictures, and moving images). For example, the memory unit 760 may store images captured by the camera 721, for example, pictures or moving images.

The interface unit 770 serves as a passage for connection between the terminal 200A and an external device. The interface unit 770 may receive data or power from the external device, and may transmit the same to respective components in the terminal 200A, or may transmit data in the terminal 200A to the external device. For example, the interface unit 770 may include a wired/wireless headset port, an external charger port, a wired/wireless data port, a memory card port, a port for connection of a device having an identification module, an audio input/output (I/O) port, a video input/output (I/O) port, and an earphone port.

The controller 780 may control the overall operation of the terminal 200A. For example, the controller 780 may perform control and processing related to voice calls, data communication, and video calls.

The controller 780 may include a multimedia module 781 for multimedia playback. The multimedia module 781 may be provided in the controller 780, or may be provided separately from the controller 780.

The controller 780 may perform pattern recognition processing, by which writing or drawing input to the touchscreen is perceived as characters or images.

The power supply 790 may supply power required to operate the respective components upon receiving external power or internal power under the control of the controller 780.

The features, structures, effects, and the like described above in the embodiments are included in at least one embodiment of the present disclosure, but are not necessarily limited to only one embodiment. Furthermore, the features, structures, effects, and the like exemplified in the respective embodiments may be combined with other embodiments or modified by those skilled in the art. Therefore, content related to such combinations and modifications should be construed as falling within the scope of the present disclosure.

### [Industrial Applicability]

The embodiments are applicable to an actuator and a camera device capable of securing uniform and stable driving force for movement of a moving unit in an optical-axis direction and increasing the stroke range of the moving unit and a camera device.

## Claims

1. An actuator comprising:
a lens barrel;
a magnet disposed on the lens barrel; and
a coil configured to move the lens barrel in a first direction through interaction with the magnet,
wherein the coil comprises a first coil unit, a second coil unit, and a third coil unit disposed in the first direction,
wherein the magnet overlaps the first to third coil units in a second direction perpendicular to the first direction, and
wherein a length of the magnet in the first direction is less than a sum of lengths of the first to third coil units in the first direction.

2. The actuator according to claim 1, wherein the length of the magnet in the first direction is greater than a sum of lengths of two coil units in the first direction among the first to third coil units.

3. The actuator according to claim 1, wherein signals having different phases are respectively supplied to the first to third coil units.

4. The actuator according to claim 1, wherein alternating-current signals having different phases are respectively supplied to the first to third coil units.

5. The actuator according to claim 1, wherein signals having a phase difference of 120 degrees from each other are respectively supplied to the first to third coil units.

6. The actuator according to claim 1, wherein alternating currents having a phase difference of 120 degrees from each other are respectively supplied to the first to third coil units.

7. The actuator according to claim 1, wherein the magnet comprises a first magnet part comprising an N pole and an S pole facing each other in the second direction, a second magnet part comprising an S pole and an N pole facing each other in the second direction, and a partition wall disposed between the first magnet part and the second magnet part, and
wherein the first magnet part and the second magnet part are disposed in the first direction, with the partition wall interposed therebetween.

8. The actuator according to claim 7, wherein a length of the first magnet part in the first direction is greater than a length of each of the first to third coil units in the first direction, and
wherein a length of the second magnet part in the first direction is greater than the length of each of the first to third coil units in the first direction.

9. The actuator according to claim 7, wherein a length of the first magnet part in the first direction is greater than a length of the first coil unit in the first direction.

10. The actuator according to claim 7, wherein a length of the second magnet part in the first direction is greater than a length of the first coil unit in the first direction.
